# EUROPEAN PATENT APPLICATION

(11) **EP 3 225 381 A1**
(43) Date of publication of application: **04.10.2017**
(21) Application number: 17163928.9
(22) Date of filing: 30.03.2017
(51) Int. Cl.: B29C 65/52, A41H 43/04, D06H 5/00, A41D 27/24

(54) **CLOTH BONDING DEVICE**

(30) Priority: 30.03.2016 JP 2016067002
(71) Applicant: BROTHER KOGYO KABUSHIKI KAISHA, Nagoya-shi, Aichi-ken 467-8561 (JP)
(72) Inventor: IWAKOSHI, Hiroyasu, Aichi-ken, 467-8562 (JP)
(74) Representative: J A Kemp

(57) **Abstract**

An upper conveyance portion (100) is provided with a main drive roller (120) on a collar portion (161) of a hub that is fixed to a rotating shaft (150). On the left and right sides of the main drive roller (120), driven rollers (130, 140), which rotate independently from the rotating shaft, are provided via bearings (135, 145). The main drive roller and the driven rollers are same components. A lower conveyance portion (200) is provided with a main drive roller (220) on a collar portion (261) of a hub that is fixed to a rotating shaft (250). On the left and right sides of the main drive roller, driven rollers (230, 240), which rotate independently from the rotating shaft, are provided via bearings (235, 245). The main drive roller and the driven rollers are same components.

## Description

### BACKGROUND

The present invention relates to a cloth bonding device.

A cloth bonding device disclosed in Japanese Laid-Open Patent Publication No. 2015-190075 is provided with two rollers that convey cloths and a nozzle that applies an adhesive. The upper roller and the lower roller clamp and convey two cloths that are to be bonded. The nozzle applies the adhesive between the two cloths. The upper roller and the lower roller press the adhesive sandwiched between the two cloths, and thus bond the two cloths together. There are cases in which the cloth bonding device conveys a cloth whose sections to be bonded are curved and applies the adhesive. When the cloth passes between the upper roller and the lower roller, at the curved sections to be bonded, a difference occurs between a path length of the section on the inner peripheral side of the curved cloth and a path length of the section on the outer peripheral side of the curved cloth. The upper roller and the lower roller are rotated by the power of a drive source. The upper roller and the lower roller convey the cloth in a straight line in a direction orthogonal to a rotating shaft of each of the upper roller and the lower roller. Thus, when an operator pulls the cloth and adjusts the cloth to follow the curved shape, the application of the adhesive becomes uneven, which may cause a bonding failure.

### SUMMARY

It is an object of the present invention to provide a cloth bonding device capable of smoothly conveying a cloth even when a bonding section of the cloth is curved, and capable of uniformly applying an adhesive to the cloth.

A cloth bonding device according to the present invention includes a nozzle, a first conveyance portion, and a second conveyance portion. The nozzle is adapted to discharge an adhesive onto a cloth. The first conveyance portion is disposed on a downstream side in a conveyance direction of the cloth with respect to the nozzle. The second conveyance portion is adapted to clamp the cloth together with the first conveyance portion and to convey the cloth in cooperation with the first conveyance portion. The cloth bonding device includes a first drive portion and a second drive portion. The first drive portion is adapted to generate power to drive the first conveyance portion. The second drive portion is adapted to generate power to drive the second conveyance portion. The first conveyance portion includes a first main drive roller and a first driven roller. The first main drive roller is adapted to rotate around a first shaft using the power generated by the first drive portion. The first driven roller is adapted to rotate independently from rotation of the first main drive roller. The first driven roller is adjacent to the first main drive roller and have a same outer diameter as the first main drive roller and a same central axis as the first shaft. The second conveyance portion includes a second main drive roller and a second driven roller. The second main drive roller is arranged in parallel to the first shaft and is adapted to rotate around a second shaft using the power generated by the second drive portion. The second driven roller is adapted to rotate independently from rotation of the second main drive roller. The second driven roller is adjacent to the second main drive roller and having a same outer diameter as the second main drive roller and a same central axis as the second shaft. The first driven roller can rotate independently from the rotation of the first main drive roller, and the second driven roller can rotate independently from the rotation of the second main drive roller. Thus, the first driven roller and the second driven roller can each rotate by a rotation amount different from that of the first main drive roller and the second main drive roller. For example, when the first driven roller and the second driven roller are positioned on the inner peripheral side of a bonding section of the curved cloth, the first driven roller and the second driven roller can each rotate by a rotation amount smaller than that of the first main drive roller and the second main drive roller. For example, when the first driven roller and the second driven roller are positioned on the outer peripheral side of the curved bonding section, the first driven roller and the second driven roller can each rotate by a rotation amount larger than that of the first main drive roller and the second main drive roller. Thus, the cloth bonding device can convey the cloth smoothly and stably, and can apply the adhesive uniformly. The outer diameter of the first main drive roller is the same as that of the first driven roller. The outer diameter of the second main drive roller is the same as that of the second driven roller. When the cloth is conveyed, a gap between the first conveyance portion and the second conveyance portion is constant in a width direction that is parallel to the axial direction of the first shaft and the second shaft. Thus, the first conveyance portion and the second conveyance portion can uniformly press the cloths and can reliably bond the cloths.

In the cloth bonding device, the first conveyance portion may include a plurality of the first driven rollers disposed on at least one of both sides of the first main drive roller in an axial direction of the first shaft. The second conveyance portion may include a plurality of the second driven rollers disposed on at least one of both sides of the second main drive roller in an axial direction of the second shaft. Each of the plurality of first driven rollers can rotate by a rotation amount different from the rotation amount of the first main drive roller. Each of the plurality of second driven rollers can rotate by a rotation amount different from the rotation amount of the second main drive roller. Thus, the cloth bonding device can convey the cloth smoothly and stably, and can apply the adhesive uniformly.

In the cloth bonding device, the first conveyance portion may include the plurality of first driven rollers disposed on both the sides of the first main drive roller in the axial direction of the first shaft. The second conveyance portion may include the plurality of second driven rollers disposed on both the sides of the second main drive roller in the axial direction of the second shaft. When the curved shape of the bonding section of the cloth is curved to one side, the first driven roller on the one side of the first main drive roller rotates by a rotation amount smaller than that of the first main drive roller. The first driven roller on the other side of the first main drive roller rotates by a rotation amount larger than that of the first main drive roller. The second driven roller on the one side of the second main drive roller rotates by a rotation amount smaller than that of the second main drive roller. The second driven roller on the other side of the second main drive roller rotates by a rotation amount larger than that of the second main drive roller. When the curved shape of the bonding section of the cloth is curved to the other side, the first driven roller on the one side of the first main drive roller rotates by a rotation amount larger than that of the first main drive roller. The first driven roller on the other side of the first main drive roller rotates by a rotation amount smaller than that of the first main drive roller. The second driven roller on the one side of the second main drive roller rotates by a rotation amount larger than that of the second main drive roller. The second driven roller on the other side of the second main drive roller rotates by a rotation amount smaller than that of the second main drive roller. Thus, the cloth bonding device can convey the cloth smoothly and stably, and can apply the adhesive uniformly.

In the cloth bonding device, the first conveyance portion may include a first. regulation member fixed to the first shaft. The first regulation member may regulate movement of the first driven roller in the axial direction of the first shaft by sandwiching the first driven roller between the first regulation member and the first main drive roller. The second conveyance portion may include a second regulation member fixed to the second shaft. The second conveyance portion may regulate movement of the second driven roller in the axial direction of the second shaft by sandwiching the second driven roller between the second regulation member and the second main drive roller. The first regulation member may include a first regulation plate, and a first regulation ring. The first regulation plate may have a plate shape with a larger outer diameter than the first shaft, and may be fixed to an end portion of the first shaft. The first regulation ring may have an annular shape that covers a surface of the first shaft in a circumferential direction, and may be fixed to the surface of the first shaft on an opposite side to the first regulation plate with respect to the first main drive roller and the first driven roller. The second regulation member may include a second regulation plate and a second regulation ring. The second regulation plate may have a plate shape with a larger outer diameter than the second shaft, and may be fixed to an end portion of the second shaft. The second regulation ring may have an annular shape that covers a surface of the second shaft in a circumferential direction, and may be fixed to the surface of the second shaft on an opposite side to the second regulation plate with respect to the second main drive roller and the second driven roller. The first regulation member inhibits a gap between the first main drive roller and the first driven roller from expanding. The second regulation member inhibits a gap between the second main drive roller and the second driven roller from expanding. Thus, the first conveyance portion and the second conveyance portion can uniformly press the cloths in the width direction of the first conveyance portion and the second conveyance portion, and can reliably bond the cloths together. The first restriction plate and the second restriction plate are respectively fixed to the end portions of the first shaft and the second shaft. Thus, when a bonding operation is performed, an operator can secure an operation area on the opposite side to the first shaft and the second shaft with respect to the first regulation plate and the second regulation plate.

In the cloth bonding device, the first main drive roller may be fixed to the first shaft. The first shaft may rotate using the power generated by the first drive portion. The first conveyance portion may include a first bearing between the first shaft and the first driven roller. The first bearing may support the first driven roller such that the first driven roller can rotate independently from rotation of the first shaft. The second main drive roller may be fixed to the second shaft. The second shaft may rotate using the power generated by the second drive portion. The second conveyance portion may include a second bearing between the second shaft and the second driven roller. The second bearing may support the second driven roller such that the second driven roller can rotate independently from rotation of the second shaft. The first shaft can support the first driven roller via the first bearing. Since the rotation resistance is smaller than when the first driven roller is directly supported by the first shaft, the first driven roller can rotate smoothly. The second shaft can support the second driven roller via the second bearing. Since the rotation resistance is smaller than when the second driven roller is directly supported by the second shaft, the second driven roller can rotate smoothly.

In the cloth bonding device, the first driven roller and the first bearing may have an annular shape. An outer peripheral surface of the first bearing may be fixed, by press fitting, to an inner peripheral surface of the first driven roller. The second driven roller and the second bearing may have an annular shape. An outer peripheral surface of the second bearing may be fixed, by press fitting, to an inner peripheral surface of the second driven roller. An engagement structure, screws, an adhesive and the like are not required to fix the first driven roller to the first bearing and to fix the second driven roller to the second bearing. Thus, in the cloth bonding device, the structure can be simplified and the number of components can be reduced.

In the cloth bonding device, the first main drive roller may have an annular shape, and an inner diameter of the first main drive roller may be the same as an inner diameter of the first driven roller. The first shaft may have a flange-shaped first collar portion having a same outer diameter as the first bearing. An outer peripheral surface of the first collar portion may be fixed, by press fitting, to an inner peripheral surface of the first main drive roller. The second main drive roller may have an annular shape, and an inner diameter of the second main drive roller may be the same as an inner diameter of the second driven roller. The second shaft may have a flange-shaped second collar portion having a same outer diameter as the second bearing. An outer peripheral surface of the second collar portion may be fixed, by press fitting, to an inner peripheral surface, of the second main drive roller. The first main drive roller and the first driven roller can achieve the use of common components. The second main drive roller and the second driven roller can achieve the use of common components.

In the cloth bonding device, a gap may be provided between an end surface of the first bearing and an end surface of the first collar portion in the axial direction of the first shaft, and an end surface of the first driven roller may protrude further to the first main drive roller side than the end surface of the first bearing in the axial direction of the first shaft. A gap may be provided between an end surface of the second bearing and an end surface of the second collar portion in the axial direction of the second shaft, and an end surface of the second driven roller may protrude further to the second main drive roller side than the end surface of the second bearing in the axial direction of the second shaft. Since the gap is provided between the end surface of the first bearing and the end surface of the first collar portion, the first shaft can rotate smoothly. The end surface of the first driven roller protrudes further to the first main drive roller side than the end surface of the first bearing. Thus, the first conveyance portion can narrow the gap between the first driven roller and the first main drive roller. Since the gap is provided between the end surface of the second bearing and the end surface of the second collar portion, the second shaft can rotate smoothly. The end surface of the second driven roller protrudes further to the second main drive roller side than the end surface of the second bearing. Thus, the second conveyance portion can narrow the gap between the second driven roller and the second main drive roller. Therefore, the first conveyance portion and the second conveyance portion can uniformly press the cloths in the width direction, and can reliably bond the cloths together.

In the cloth bonding device, the second conveyance portion may be adapted to move in the axial direction of the second shaft between a directly facing position and a non-directly facing position. The directly facing position may be a position at which the first main drive roller faces the second main drive roller in a radial direction and the first driven roller faces the second driven roller in the radial direction. The non-directly facing position may be a position at which the first main drive roller faces the second driven roller in the radial direction and the second main drive roller faces the first driven roller in the radial direction. In the directly facing position, the first main drive roller and the second main drive roller face each other, and can feed the cloth in a straight line in a direction orthogonal to the first shaft and the second shaft. In the non-directly facing position, by changing the relative rotation speed of the first main drive roller and the second main drive roller, the first main drive roller and the second main drive roller can feed the cloth while easily bending the cloth to one side or the other side in the axial direction.

### BRIEF DESCRIPTION OF THE DRAWINGS

Embodiments will be described below in detail with reference to the accompanying drawings in which:
FIG. 1 is a perspective view of a cloth bonding device 1;
FIG. 2 is an enlarged view within a circle C1 shown in FIG. 1;
FIG. 3 is a left side view of an upper conveyance portion 100 and a lower conveyance portion 200;
FIG. 4 is a front view of the upper conveyance portion 100 and the lower conveyance portion 200;
FIG. 5 is an exploded perspective view of the upper conveyance portion 100 and the lower conveyance portion 200;
FIG. 6 is a cross-sectional view of the upper conveyance portion 100 and the lower conveyance portion 200, taken in the direction of arrows along a line I-I shown in FIG. 3;
FIG. 7 is an enlarged cross-sectional view of the upper conveyance portion 100 within a circle C2 shown in FIG. 6;
FIG. 8 is an enlarged cross-sectional view of the lower conveyance portion 200 within a circle C3 shown in FIG. 6; and
FIG. 9 is a front view of the upper conveyance portion 100 and the lower conveyance portion 200 when the lower conveyance portion 200 is moved to the right relative to the upper conveyance portion 100.

### DETAILED DESCRIPTION

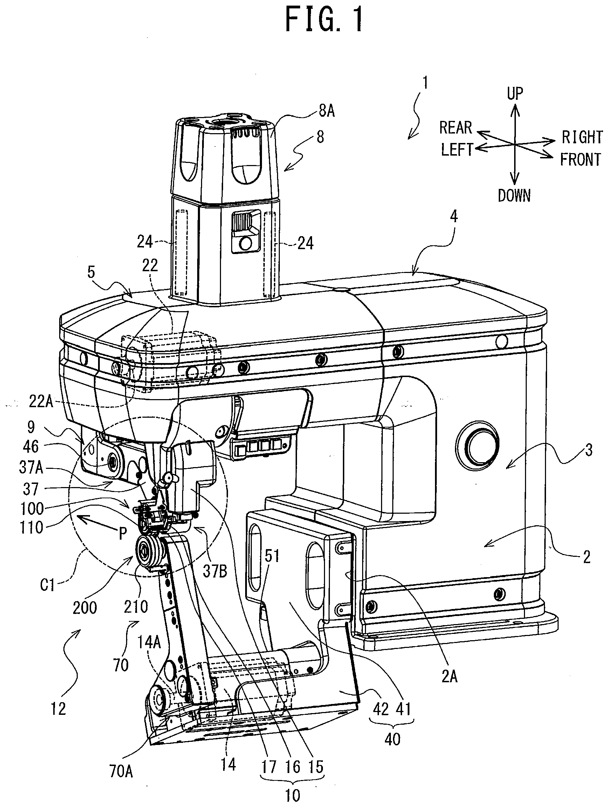

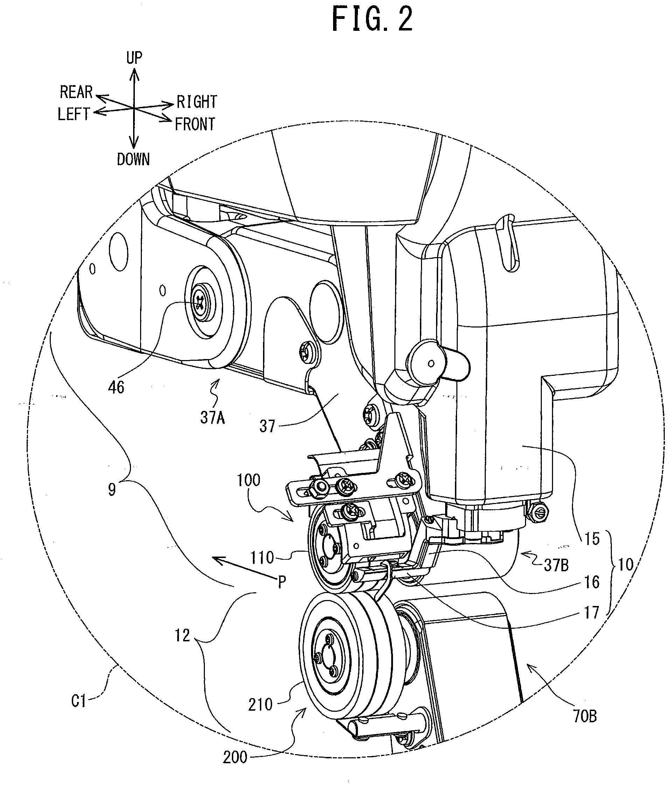

An outline configuration of a cloth bonding device 1 will be explained with reference to FIG. 1 and FIG. 2. In the following explanation, left and right directions, front and rear directions, and up and down directions as indicated by arrows in the drawings are used. The cloth bonding device 1 conveys an upper cloth and a lower cloth, which are disposed to face each other in the up-down direction, in a conveyance direction P. The cloth bonding device 1 applies an adhesive to the upper cloth, and presses a section to which the adhesive has been applied, thus bonding the upper cloth and the lower cloth. The conveyance direction P of the cloth bonding device 1 is a direction from a front side to a rear side. The front side is an upstream side in the conveyance direction P, and the rear side is a downstream side in the conveyance direction P.

The cloth bonding device 1 is provided with a base 2, a pillar 3, an arm 4, a head 5, a swinging mechanism 10, an upper conveyance mechanism 9, a lower conveyance mechanism 12 and an attachment member 40. The base 2 is a base for the cloth bonding device 1, and has a substantially cuboid shape. The left side surface of the base 2 is an attachment surface 2A. The attachment surface 2A fixes the attachment member 40 to the left side of the base 2. The attachment member 40 determines the position of the lower conveyance mechanism 12 in the left-right direction and fixes the lower conveyance mechanism 12, thus attaching the lower conveyance mechanism 12 to the base 2.

The pillar 3 has a columnar shape, and extends upward from the right end side of the top surface of the base 2. The arm 4 is connected to the upper end of the pillar 3. The arm 4 extends in the left-right direction. The left end of the arm 4 protrudes to the left of the left side surface of the pillar 3. The head 5 is provided on the left end of the arm 4. The head 5 has a substantially cuboid shape, and protrudes to the left. The head 5 protrudes to the left of the base 2.

A pump portion, a reservoir portion 8, the upper conveyance mechanism 9, the swinging mechanism 10 and the like are supported inside the head 5. The pump portion is provided to the right and to the front of the head 5. The reservoir portion 8 is provided to the rear of the pump portion. The reservoir portion 8 has a substantially cuboid shape, and is positioned to the rear right end side of the head 5. The reservoir portion 8 extends in the up-down direction, and has a bottomed cylindrical shape whose upper portion is open. The reservoir portion 8 is provided with a lid portion 8A. The lid portion 8A is provided on the upper portion of the reservoir portion 8, and covers the opening of the upper portion of the reservoir portion 8. The reservoir portion 8 stores the adhesive in a storage portion inside the reservoir portion 8. The reservoir portion 8 is provided with heaters 24 on both sides of the storage portion. The heaters 24 heat the storage portion. The adhesive is a hot melt adhesive, and is melted and liquefied by the heaters 24.

The pump portion is provided with a supply passage, a gear pump, a pump motor and the like. The supply passage leads the adhesive from the reservoir portion 8 to the gear pump. The gear pump is provided inside the head 5. The gear pump sucks up an appropriate amount of the adhesive from the reservoir portion 8, and accurately supplies the adhesive to a nozzle 17. The pump motor is provided inside the arm 4. The pump motor drives the gear pump.

The swinging mechanism 10 is provided on a front portion of the head 5. The swinging mechanism 10 is provided with the nozzle 17, a nozzle support portion 16 and a lever 15. A plurality of discharge outlets, which discharge the adhesive, are provided in a rear portion of the nozzle 17. The nozzle 17 is positioned on the upstream side, in the conveyance direction P, of a position where an upper roller portion 110 of an upper conveyance portion 100 faces a lower roller portion 210 of a lower conveyance portion 200. The discharge outlets face the outer peripheral surface of the upper roller portion 110. The nozzle 17 is substantially rod shaped and extends in the left-right direction.

The nozzle support portion 16 supports the right end portion of the nozzle 17. The nozzle support portion 16 extends forward and upward, and is internally provided with a flow passage for the adhesive. The lever 15 is arm-shaped and extends downward from a base end portion to a leading end portion on the left side of the front portion of the head 5. The lever 15 can swing in the front-rear direction around a rotating shaft provided inside the head 5. The rotating shaft extends in the left-right direction. The right end of the rotating shaft is connected to the pump portion, and the left end of the rotating shaft supports the lever 15. The rotating shaft is internally provided with a flow passage for the adhesive. The base end portion of the lever 15 is provided on the front left end side inside the head 5. The leading end portion of the lever 15 is oriented downward. The upper end of the nozzle support portion 16 is fixed to the leading end portion of the lever 15. The lever 15 is internally provided with a flow passage for the adhesive. The lever 15 is internally provided with a heater in the vicinity of the flow passage. The flow passages of the rotating shaft, the lever 15 and the nozzle support portion 16 cause the adhesive supplied by the gear pump to flow toward the nozzle 17. A nozzle gap is formed between the discharge outlets of the nozzle 17 and the outer peripheral surface of the upper roller portion 110. The nozzle gap is a gap to secure an appropriate distance for applying the adhesive discharged from the nozzle 17 onto a bonding surface of the cloth that is the object to be bonded.

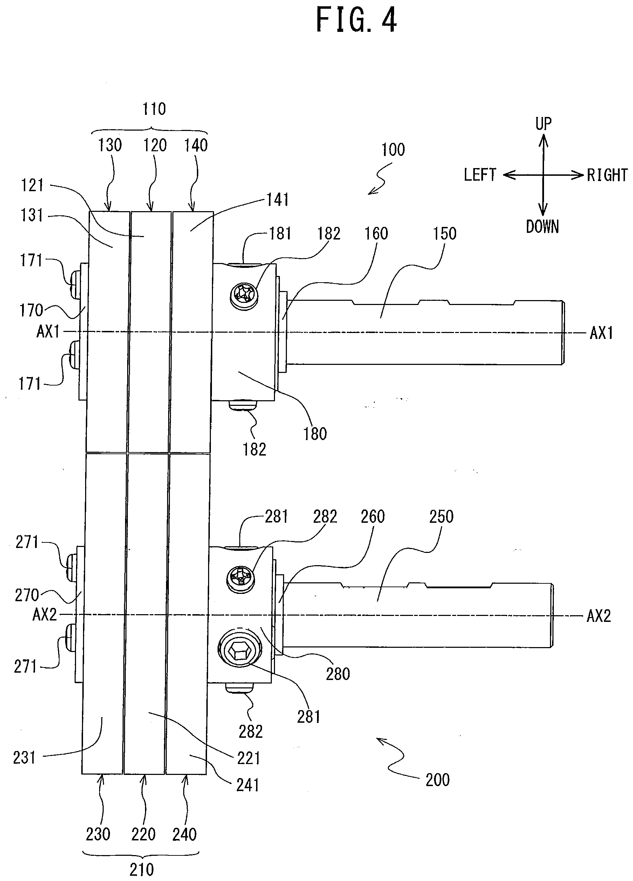

The upper conveyance mechanism 9 is provided below the head 5. The upper conveyance mechanism 9 is provided with a support portion 37, the upper conveyance portion 100, an upper conveyance motor 22 and the like. A base end portion 37A of the support portion 37 is provided on a lower portion of the head 5. The support portion 37 extends forward from the base end portion 37A and bends downward, and then extends diagonally forward and downward toward a leading end portion 37B. The leading end portion 37B is provided with the upper conveyance portion 100. The upper roller portion 110 of the upper conveyance portion 100 is positioned on the left side surface side of the leading end portion 37B. The upper roller portion 110 rotates around a rotating shaft 150 (refer to FIG. 4) that extends in the left-right direction. The rotating shaft 150 protrudes into the interior of the leading end portion 37B. The leading end portion 37B rotatably supports the rotating shaft 150. The upper roller portion 110 clamps and pressure bonds the cloth, which is the object to be bonded, at the facing position where the upper roller portion 110 faces the lower roller portion 210 of the lower conveyance portion 200, and conveys the cloth in the conveyance direction P. The configuration of the upper conveyance portion 100 will be described in detail later.

The upper conveyance motor 22 is provided on the rear upper side inside the head 5. The power of the upper conveyance motor 22 is transmitted to the upper conveyance portion 100 by a pulley fixed to an output shaft 22A and a plurality of pulleys, belts and the like provided inside the support portion 37.

A support shaft 46, whose axial direction is the left-right direction, is provided in a position below the rear left end side of the head 5. The head 5 supports the base end portion 37A of the support portion 37 using the support shaft 46, such that the leading end portion 37B can swing in the up-down direction. The head 5 is internally provided with an air cylinder. The air cylinder is driven by the pressure of air fed by an air compressor, and presses the leading end portion 37B of the support portion 37 downward. At this time, the air cylinder maintains a state in which the upper roller portion 110 is in contact with the lower roller portion 210.

The lower conveyance mechanism 12 is provided in a position to the left of the base 2 and below the head 5. The lower conveyance mechanism 12 is substantially L-shaped in a front view. The lower conveyance mechanism 12 is provided with a motor housing portion 51, a lower conveyance motor 14, a support portion 70 and the lower conveyance portion 200. The motor housing portion 51 is a substantially cuboid box body that extends in the left-right direction, and internally houses the lower conveyance motor 14. The lower conveyance motor 14 is provided inside the motor housing portion 51 such that the axial direction of an output shaft 14A of the lower conveyance motor 14 is the left-right direction. The output shaft 14A protrudes to the left from the left wall of the motor housing portion 51.

The support portion 70 is a hollow shaped box body that extends in the up-down direction. The right wall of a base end portion 70A of the support portion 70 is provided integrally with the left wall of the motor housing portion 51. The output shaft 14A of the lower conveyance motor 14 protrudes into the interior of the base end portion 70A. A leading end portion 70B of the support portion 70 is positioned above and to the rear of the base end portion 70A. The leading end portion 70B is provided with the lower conveyance portion 200. The lower roller portion 210 of the lower conveyance portion 200 is positioned on the left side surface side of the leading end portion 70B. The lower roller portion 210 rotates around a rotating shaft 250 (refer to FIG. 4) that extends in the left-right direction. The rotating shaft 250 protrudes into the interior of the leading end portion 70B. The leading end portion 70B rotatably supports the rotating shaft 250. The axial direction of the rotating shaft 250 of the lower roller portion 210 is parallel to the axial direction of the rotating shaft 150 of the upper roller portion 110, and is orthogonal to the conveyance direction P. The power of the lower conveyance motor 14 is transmitted to the lower conveyance portion 200 by a plurality of pulleys, belts and the like provided inside the support portion 70. The configuration of the lower conveyance portion 200 will be described in detail later.

The lower conveyance mechanism 12 is attached to the attachment surface 2A of the base 2 using the attachment member 40. The attachment member 40 is provided with a fixing portion 41 and a holding portion 42. The fixing portion 41 is substantially rectangular in a left side view and is thick in the left-right direction. The fixing portion 41 is fixed to the attachment surface 2A. The holding portion 42 extends downward and forward from the lower end portion of the fixing portion 41, and then bends and extends to the left. The holding portion 42 is substantially L-shaped in a rear view. A section of the holding portion 42 that extends to the left is a substantially U-shaped groove in a left side view. The holding portion 42 holds the lower conveyance motor 14 of the lower conveyance mechanism 12. The rear side of the top surface of a bottom portion of the holding portion 42 is inclined downward, and the motor housing portion 51 is placed on the top surface of the bottom portion of the holding portion 42. The bottom portion of the holding portion 42 has a long hole that extends in the left-right direction. The lower conveyance mechanism 12 is fixed to the holding portion 42 by a screw passed through the long hole being tightened into a screw hole provided in the bottom wall of the motor housing portion 51. The lower conveyance mechanism 12 is assembled onto the cloth bonding device 1 in a state in which the lower conveyance portion 200 is oriented such that the lower conveyance portion 200 is positioned above the lower conveyance mechanism 12. The lower roller portion 210 of the lower conveyance portion 200 faces the upper roller portion 110 of the upper conveyance portion 100, and the surfaces of the lower roller portion 210 and the upper roller portion 110 can come into contact with each other. The lower conveyance mechanism 12 can change the position at which the motor housing portion 51 is fixed to the holding portion 42, in the left-right direction within a range of the long hole. In other words, in the left-right direction, the attachment member 40 can adjust the facing position where the surface of the lower roller portion 210 comes into contact with the surface of the upper roller portion 110.

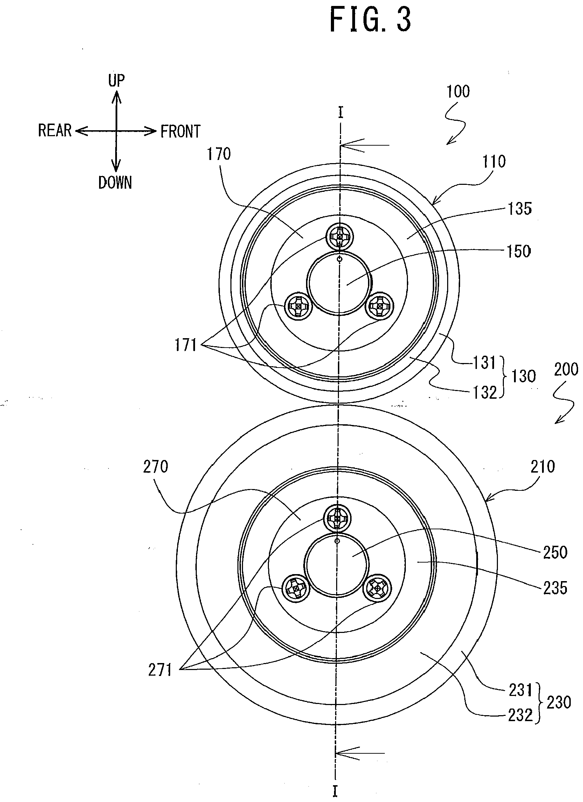

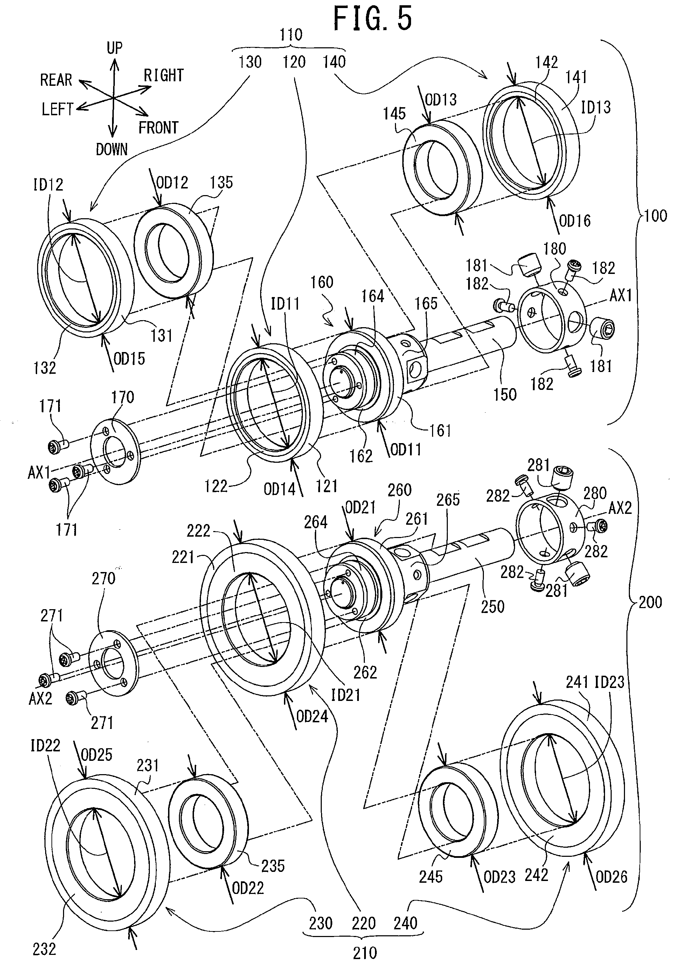

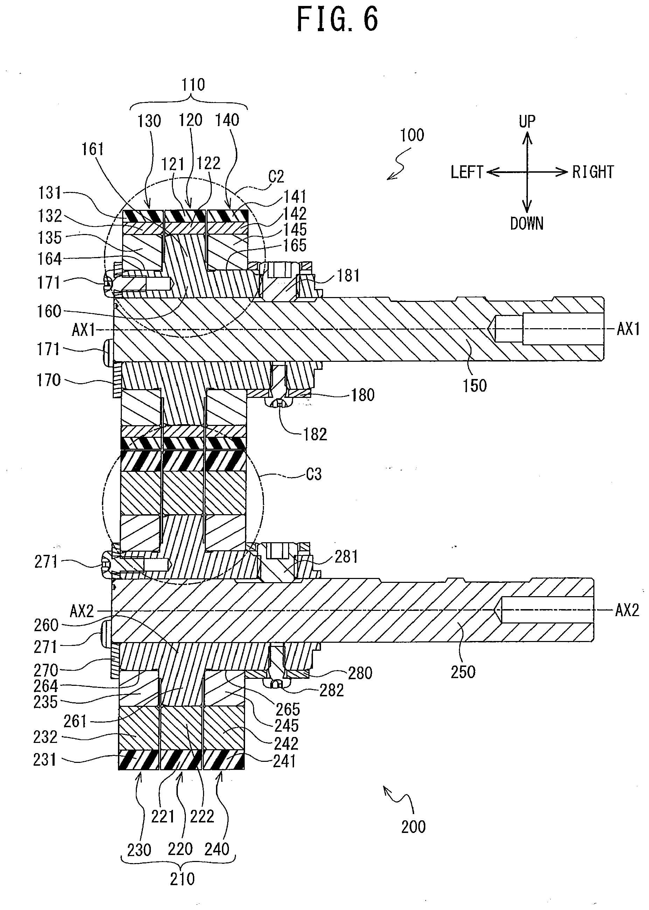

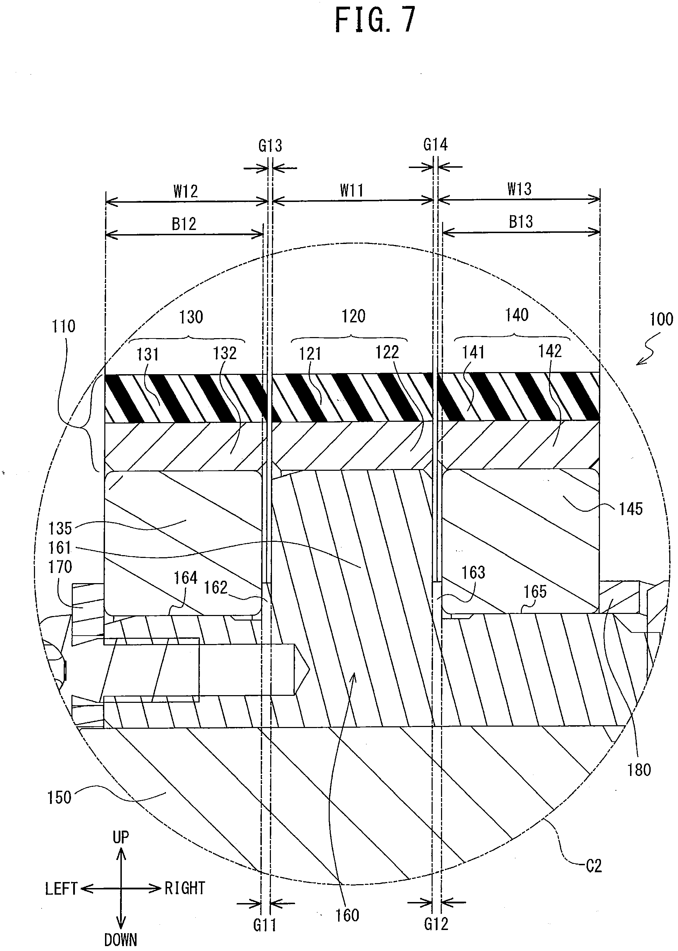

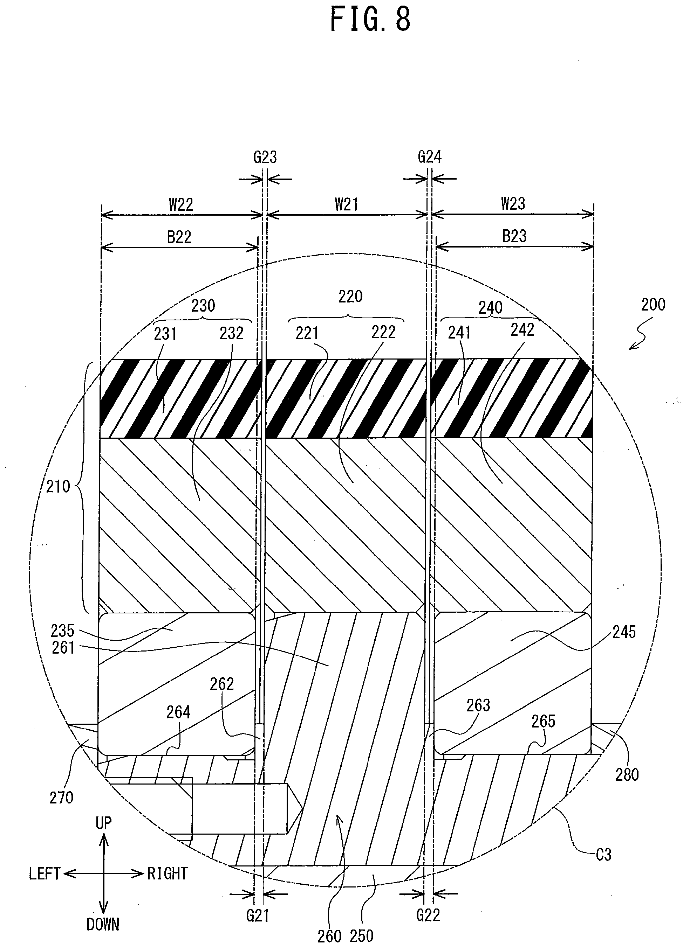

The configurations of the upper conveyance portion 100 and the lower conveyance portion 200 will be explained with reference to FIG. 3 to FIG. 8. The upper conveyance portion 100 is provided with the rotating shaft 150, a hub 160, bearings 135 and 145, a regulation plate 170, a regulation ring 180 and the upper roller portion 110. The rotating shaft 150 is a metal member that extends in a columnar shape around a central axis AX1. The leading end portion 37B of the support portion 37 of the upper conveyance mechanism 9 supports the right end portion of the rotating shaft 150 such that the rotating shaft 150 can rotate around the central axis AX1. The central axis AX1 extends in the left-right direction.

The hub 160 is a cylindrical metal member that extends in the left-right direction, and is thick in the radial direction. The axial direction of the hub 160 is the left-right direction. The inner diameter of the hub 160 is substantially the same as the outer diameter of the rotating shaft 150. The hub 160 is fitted onto the left end portion of the rotating shaft 150 and is fixed by set screws 181. The hub 160 rotates integrally with the rotating shaft 150.

The hub 160 has a collar portion 161 on a section to the left of the center in the axial direction. The collar portion 161 protrudes in the radial direction over the entire periphery of the hub 160 in the circumferential direction. OD11 denotes the outer diameter of the collar portion 161. W11 denotes the width of the collar portion 161 in the axial direction. The left surface and the right surface of the collar portion 161 have a left step portion 162 and a right step portion 163, respectively. The left step portion 162 is provided at a boundary portion between the left surface of the collar portion 161 and an outer peripheral surface 164, in a stepped manner over the entire periphery in the circumferential direction. The outer peripheral surface 164 is an outer peripheral surface of the hub 160 on the left side of the collar portion 161. The right step portion 163 is provided at a boundary portion between the right surface of the collar portion 161 and an outer peripheral surface 165, in a stepped manner over the entire periphery in the circumferential direction. The outer peripheral surface 165 is an outer peripheral surface of the hub 160 on the right side of the collar portion 161. G11 and G12 respectively denote the width of the left step portion 162 and the width of the right step portion 163 in the axial direction. The width G11 is substantially the same as the width G12.

The length of the outer peripheral surface 164 in the axial direction is the same as a length B12 of the bearing 135 in the axial direction. The outer diameter of the outer peripheral surface 164 is substantially the same as the inner diameter of the bearing 135. The left end surface of the hub 160 has a plurality of screw holes that extend in the axial direction. The length of the outer peripheral surface 165 in the axial direction is larger than a length B13 of the bearing 145 in the axial direction. The outer peripheral surface 165 has a plurality of screw holes that extend in the radial direction. The outer diameter of the outer peripheral surface 164 is the same as the outer diameter of the outer peripheral surface 165.

The bearings 135 and 145 are annular ball bearings. The axial direction of the bearings 135 and 145 is the left-right direction, and the widths of the bearings 135 and 145 are B12 and B13, respectively. The outer diameters of the bearings 135 and 145 are OD12 and OD13, respectively. The bearing 135 and the bearing 145 are same components. Therefore, B12 and B13 are the same as each other, and OD12 and OD13 are the same as each other. The outer diameters OD12 and OD13 of the bearings 135 and 145 are the same as the outer diameter OD11 of the collar portion 161. The bearing 135 is fitted onto the outer peripheral surface 164 of the hub 160. The right surface of the bearing 135 comes into contact with the left surface of the left step portion 162, and the gap G11 is formed between the right surface of the bearing 135 and the left surface of the collar portion 161. The bearing 145 is fitted onto the outer peripheral surface 165 of the hub 160. The left surface of the bearing 145 comes into contact with the right surface of the right step portion 163, and the gap G12 is formed between the left surface of the bearing 145 and the right surface of the collar portion 161.

The regulation plate 170 is a disc-shaped metal member, and has an opening at the center of the regulation plate 170. The inner diameter of the opening is substantially the same as the outer diameter of the rotating shaft 150. The axial direction of the regulation plate 170 is the left-right direction. The regulation plate 170 has a plurality of through holes around the opening, and a plurality of screws 171 penetrate through the through holes in the axial direction. The outer diameter of the regulation plate 170 is larger than the outer diameter of the outer peripheral surface 164 of the hub 160. The regulation plate 170 is fixed to the left end surface of the hub 160 by the screws 171 in a state in which the bearing 135 is fitted onto the outer peripheral surface 164. Thus, the regulation plate 170 is fixed to the left end portion of the rotating shaft 150. The right surface of the regulation plate 170 comes into contact with the left surface of the bearing 135. The bearing 135 is positioned in the axial direction between the right surface of the regulation plate 170 and the left surface of the left step portion 162.

The regulation ring 180 is a cylindrical metal member. The inner diameter of the regulation ring 180 is substantially the same as the outer diameter of the outer peripheral surface 165 of the hub 160. The axial direction of the regulation ring 180 is the left-right direction. The regulation ring 180 has a plurality of through holes through which a plurality of the set screws 181 and screws 182 penetrate in the radial direction. In a state in which the bearing 145 is fitted onto the outer peripheral surface 165, the regulation ring 180 is fitted onto the outer peripheral surface 165 from the right side of the bearing 145. The screws 182 are respectively tightened into the screw holes of the outer peripheral surface 165, and thus the regulation ring 180 is fixed to the hub 160. In other words, the regulation ring 180 is fixed to the rotating shaft 150. The left end surface of the regulation ring 180 comes into contact with the right surface of the bearing 145. The bearing 145 is positioned in the axial direction between the left end surface of the regulation ring 180 and the right surface of the right step portion 163.

The upper roller portion 110 has a main drive roller 120 and driven rollers 130 and 140. The width direction of the upper roller portion 110 is the left-right direction, and is parallel to the axial direction of the rotating shaft 150. The main drive roller 120 is provided with a pressure bonding portion 121 and a spacer 122. The pressure bonding portion 121 is an annular member made of a silicone resin, for example, and width and outer diameter of the pressure bonding portion 121 are the width W11 and an outer diameter OD14, respectively. The spacer 122 is a metal annular member, and width and inner diameter of the spacer 122 are the width W11 and an inner diameter ID11, respectively. The pressure bonding portion 121 is fitted onto the outer peripheral surface of the spacer 122 and is thereby fixed. The pressure bonding portion 121 covers the entire periphery in the circumferential direction of the outer peripheral surface of the spacer 122. The inner diameter ID 11 of the spacer 122 is slightly smaller than the outer diameter OD11 of the collar portion 161 of the hub 160. The inner peripheral surface of the main drive roller 120 is fixed, by press fitting, to the outer peripheral surface of the collar portion 161. The hub 160 and the main drive roller 120 rotate integrally with the rotating shaft 150.

The driven roller 130 is adjacent to the left side of the main drive roller 120, and the driven roller 140 is adjacent to the right side of the main drive roller 120. The driven rollers 130 and 140 are provided with pressure bonding portions 131 and 141, respectively. The driven rollers 130 and 140 are provided with spacers 132 and 142, respectively. The pressure bonding portions 131 and 141 are annular members made of a silicone resin, for example, and widths and outer diameters of the pressure bonding portions 131 and 141 are widths W12 and W13 and outer diameters OD15 and OD16, respectively. The pressure bonding portions 131 and 141 are components that are the same as the pressure bonding portion 121 of the main drive roller 120. Therefore, the widths W11, W12 and W13 are the same as each other, and the outer diameters OD14, OD15 and OD16 are the same as each other. The spacers 132 and 142 are metal annular members. The widths and inner diameters of the spacers 132 and 142 are the widths W12 and W13, and inner diameters ID12 and ID13, respectively. Each of the spacers 132 and 142 is a component that is the same as the spacer 122 of the main drive roller 120. Therefore, the inner diameters ID11, ID12 and ID 13 are the same as each other. The pressure bonding portions 131 and 141 are fitted onto the outer peripheral surfaces of the spacers 132 and 142, respectively, and are fixed to the spacers 132 and 142. The pressure bonding portions 131 and 141 cover the entire periphery in the circumferential direction of the outer peripheral surfaces of the spacers 132 and 142, respectively. In other words, the main drive roller 120, the driven roller 130 and the driven roller 140 have the same configuration.

The inner diameter ID12 of the spacer 132 is slightly smaller than the outer diameter OD12 of the bearing 135. The inner diameter ID 13 of the spacer 142 is slightly smaller than the outer diameter OD13 of the bearing 145. The inner peripheral surface of the driven roller 130 is fixed, by press fitting, to the outer peripheral surface of the bearing 135. At the time of press fitting, the left surface of the driven roller 130 is aligned with the left surface of the bearing 135. The width W12 of the pressure bonding portion 131 and the spacer 132 is slightly larger than the width B12 of the bearing 135. Thus, the right surface of the driven roller 130 protrudes to the right of the right surface of the bearing 135, and is positioned in the vicinity of the left surface of the main drive roller 120. A difference between the width W12 of the driven roller 130 and the width B12 of the bearing 135 is smaller than the gap G11 between the right surface of the bearing 135 and the left surface of the collar portion 161. Thus, a gap G13, which is smaller than the gap G11, can be secured between the right surface of the driven roller 130 and the left surface of the main drive roller 120. The gap G13 is smaller than the thickness of the cloth. The bearing 135 is disposed between the driven roller 130 and the hub 160. Therefore, the driven roller 130 can rotate around the central axis AX1 independently from the rotating shaft 150.

The inner peripheral surface of the driven roller 140 is fixed, by press fitting, to the outer peripheral surface of the bearing 145. At the time of press fitting, the right surface of the driven roller 140 is aligned with the right surface of the bearing 145. The width W13 of the pressure bonding portion 141 and the spacer 142 is slightly larger than the width B13 of the bearing 145. Thus, the left surface of the driven roller 140 protrudes to the left of the left surface of the bearing 145, and is positioned in the vicinity of the right surface of the main drive roller 120. A difference between the width W13 of the driven roller 140 and the width B13 of the bearing 145 is smaller than the gap G12 between the left surface of the bearing 145 and the right surface of the collar portion 161. Thus, a gap G14, which is smaller than the gap G12, can be secured between the left surface of the driven roller 140 and the right surface of the main drive roller 120. The gap G14 is smaller than the thickness of the cloth. The bearing 145 is disposed between the driven roller 140 and the hub 160. Therefore, the driven roller 140 can rotate around the central axis AX1 independently from the rotating shaft 150.

The configuration of the lower conveyance portion 200 is substantially the same as the configuration of the upper conveyance portion 100. The lower conveyance portion 200 is provided with a rotating shaft 250, a hub 260, bearings 235 and 245, a regulation plate 270, a regulation ring 280 and the lower roller portion 210. The rotating shaft 250 is a metal member that extends in a columnar shape around a central axis AX2. The leading end portion 70B of the support portion 70 of the lower conveyance mechanism 12 supports the right end portion of the rotating shaft 250 such that the rotating shaft 250 can rotate around the central axis AX2. The central axis AX2 extends in the left-right direction, and is parallel to the central axis AX1. The rotating shaft 250 and the rotating shaft 150 are same components.

The hub 260 is a cylindrical metal member that extends in the left-right direction, and is thick in the radial direction. The axial direction of the hub 260 is the left-right direction. The inner diameter of the hub 260 is substantially the same as the outer diameter of the rotating shaft 250. The hub 260 is fitted onto the left end portion of the rotating shaft 250 and is fixed by set screws 281. The hub 260 rotates integrally with the rotating shaft 250.

The hub 260 has a collar portion 261 on a section to the left of the center in the axial direction. The collar portion 261 protrudes in the radial direction over the entire periphery of the hub 260 in the circumferential direction. OD21 denotes the outer diameter of the collar portion 261. W21 denotes the width of the collar portion 261 in the axial direction. The left surface and the right surface of the collar portion 261 have a left step portion 262 and a right step portion 263, respectively. The left step portion 262 is provided at a boundary portion between the left surface of the collar portion 261 and an outer peripheral surface 264, in a stepped manner over the entire periphery in the circumferential direction. The outer peripheral surface 264 is an outer peripheral surface of the hub 260 on the left side of the collar portion 261. The right step portion 263 is provided at a boundary portion between the right surface of the collar portion 261 and an outer peripheral surface 265, in a stepped manner over the entire periphery in the circumferential direction. The outer peripheral surface 265 is an outer peripheral surface of the hub 260 on the right side of the collar portion 261. G21 and G22 respectively denote the width of the left step portion 262 and the width of the right step portion 263 in the axial direction. The width G21 is substantially the same as the width G22.

The length of the outer peripheral surface 264 in the axial direction is the same as a length B22 of the bearing 235 in the axial direction. The outer diameter of the outer peripheral surface 264 is substantially the same as the inner diameter of the bearing 235. The left end surface of the hub 260 has a plurality of screw holes that extend in the axial direction. The length of the outer peripheral surface 265 in the axial direction is larger than a length B23 of the bearing 245 in the axial direction. The outer peripheral surface 265 has a plurality of screw holes that extend in the radial direction. The outer diameter of the outer peripheral surface 264 is the same as the outer diameter of the outer peripheral surface 265. The hub 260 and the hub 160 are same components.

The bearings 235 and 245 are annular ball bearings. The axial direction of the bearings 235 and 245 is the left-right direction, and the widths of the bearings 235 and 245 are B22 and B23, respectively. The outer diameters of the bearings 235 and 245 are OD22 and OD23, respectively. The bearing 235 and the bearing 245 are same components. Therefore, B22 and B23 are the same as each other, and OD22 and OD23 are the same as each other. The outer diameters OD22 and OD23 of the bearings 235 and 245 are the same as the outer diameter OD21 of the collar portion 261. The bearing 235 is fitted onto the outer peripheral surface 264 of the hub 260. The right surface of the bearing 235 comes into contact with the left surface of the left step portion 262, and the gap G21 is formed between the right surface of the bearing 235 and the left surface of the collar portion 261.. The bearing 245 is fitted onto the outer peripheral surface 265 of the hub 260. The left surface of the bearing 245 comes into contact with the right surface of the right step portion 263, and the gap G22 is formed between the left surface of the bearing 245 and the right surface of the collar portion 261. The bearings 235 and 245 are the same components as the bearings 135 and 145.

The regulation plate 270 is a disc-shaped metal member, and has an opening at the center of the regulation plate 270. The inner diameter of the opening is substantially the same as the outer diameter of the rotating shaft 250. The axial direction of the regulation plate 270 is the left-right direction. The regulation plate 270 has a plurality of through holes around the opening, and a plurality of screws 271 penetrate through the through holes in the axial direction. The outer diameter of the regulation plate 270 is larger than the outer diameter of the outer peripheral surface 264 of the hub 260. The regulation plate 270 is fixed to the left end surface of the hub 260 by the screws 271 in a state in which the bearing 235 is fitted onto the outer peripheral surface 264. Thus, the regulation plate 270 is fixed to the left end portion of the rotating shaft 250. The right surface of the regulation plate 270 comes into contact with the left surface of the bearing 235. The bearing 235 is positioned in the axial direction between the right surface of the regulation plate 270 and the left surface of the left step portion 262. The regulation plate 270 and the regulation plate 170 are same components.

The regulation ring 280 is a cylindrical metal member. The inner diameter of the regulation ring 280 is substantially the same as the outer diameter of the outer peripheral surface 265 of the hub 260. The axial direction of the regulation ring 280 is the left-right direction. The regulation ring 280 has a plurality of through holes through which a plurality of the set screws 281 and screws 282 penetrate in the radial direction. In a state in which the bearing 245 is fitted onto the outer peripheral surface 265, the regulation ring 280 is fitted onto the outer peripheral surface 265 from the right side of the bearing 245. The screws 282 are respectively tightened into the screw holes of the outer peripheral surface 265, and thus the regulation ring 280 is fixed to the hub 260. In other words, the regulation ring 280 is fixed to the rotating shaft 250. The left end surface of the regulation ring 280 comes into contact with the right surface of the bearing 245. The bearing 245 is positioned in the axial direction between the left end surface of the regulation ring 280 and the right surface of the right step portion 263. The regulation ring 280 and the regulation ring 180 are same components. Therefore, the upper conveyance portion 100 and the lower conveyance portion 200 have the same configuration except the upper roller portion 110 and the lower roller portion 210.

The lower roller portion 210 has a main drive roller 220 and driven rollers 230 and 240. The width direction of the lower roller portion 210 is the left-right direction, and is parallel to the axial direction of the rotating shaft 250. The main drive roller 220 is provided with a pressure bonding portion 221 and a spacer 222. The pressure bonding portion 221 is an annular member made of a silicone resin, for example, and width and outer diameter of the pressure bonding portion 221 are the width W21 and an outer diameter OD24, respectively. The width W21 of the pressure bonding portion 221 is the same as the width W11 of the pressure bonding portion 121 of the upper roller portion 110. The outer diameter OD24 of the pressure bonding portion 221 is larger than the outer diameter OD14 of the pressure bonding portion 121. The spacer 222 is a metal annular member, and width and inner diameter of the spacer 222 are the width W21 and an inner diameter ID21, respectively. The outer diameter of the spacer 222 is larger than the outer diameter of the spacer 122 of the upper roller portion 110. The inner diameter ID21 of the spacer 222 is the same as the inner diameter ID 11 of the spacer 122. The pressure bonding portion 221 is fitted onto the outer peripheral surface of the spacer 222 and is fixed to the outer peripheral surface of the spacer 222. The pressure bonding portion 221 covers the entire periphery in the circumferential direction of the outer peripheral surface of the spacer 222. The inner diameter ID21 of the spacer 222 is slightly smaller than the outer diameter OD21 of the collar portion 261 of the hub 260. The inner peripheral surface of the main drive roller 220 is fixed, by press fitting, to the outer peripheral surface of the collar portion 261. The hub 260 and the main drive roller 220 rotate integrally with the rotating shaft 250.

The driven roller 230 is adjacent to the left side of the main drive roller 220, and the driven roller 240 is adjacent to the right side of the main drive roller 220. The driven rollers 230 and 240 are provided with pressure bonding portions 231 and 241, respectively. The driven rollers 230 and 240 are provided with spacers 232 and 242, respectively. The pressure bonding portions 231 and 241 are annular members made of a silicone resin, for example, and widths and outer diameters of the pressure bonding portions 231 and 241 are widths W22 and W23 and outer diameters OD25 and OD26, respectively. The widths W22 and W23 of the pressure bonding portions 231 and 241 are the same as the widths W12 and W13 of the pressure bonding portions 131 and 141 of the upper roller portion 110. The pressure bonding portions 231 and 241 are components that are the same as the pressure bonding portion 221 of the main drive roller 220. Therefore, the outer diameters OD25 and OD26 of the pressure bonding portions 231 and 241 are respectively larger than the outer diameters OD15 and OD16 of the pressure bonding portions 131 and 141 of the upper roller portion 110. The outer diameters OD24, OD25 and OD26 are the same as each other. The spacers 232 and 242 are metal annular members. The widths and inner diameters of the spacers 232 and 242 are the widths W22 and W23, and inner diameters ID22 and ID23, respectively. The spacers 232 and 242 are components that are the same as the spacer 222 of the main drive roller 220. Therefore, the outer diameters of the spacers 232 and 242 are respectively larger than the outer diameters of the spacers 132 and 142 of the upper roller portion 110. The inner diameters ID22 and ID23 of the spacers 232 and 242 are the same as the inner diameters ID12 and ID13 of the spacers 132 and 142, respectively. The inner diameters ID21, ID22 and ID23 are the same as each other. The pressure bonding portions 231 and 241 are fitted onto the outer peripheral surfaces of the spacers 232 and 242, respectively, and are fixed to the outer peripheral surfaces of the spacers 232 and 242. The pressure bonding portions 231 and 241 cover the entire periphery in the circumferential direction of the outer peripheral surfaces of the spacers 232 and 242, respectively. In other words, the main drive roller 220, the driven roller 230 and the driven roller 240 have the same configuration.

The inner diameter ID22 of the spacer 232 is slightly smaller than the outer diameter OD22 of the bearing 235. The inner diameter ID23 of the spacer 242 is slightly smaller than the outer diameter OD23 of the bearing 245. The inner peripheral surface of the driven roller 230 is fixed, by press fitting, to the outer peripheral surface of the bearing 235. At the time of press fitting, the left surface of the driven roller 230 is aligned with the left surface of the bearing 235. The width W22 of the pressure bonding portion 231 and the spacer 232 is slightly larger than the width B22 of the bearing 235. Thus, the right surface of the driven roller 230 protrudes to the right of the right surface of the bearing 235, and is positioned in the vicinity of the left surface of the main drive roller 220. A difference between the width W22 of the driven roller 230 and the width B22 of the bearing 235 is smaller than the gap G21 between the right surface of the bearing 235 and the left surface of the collar portion 261. Thus, a gap G23, which is smaller than the gap G21, can be secured between the right surface of the driven roller 230 and the left surface of the main drive roller 220. The gap G23 is smaller than the thickness of the cloth. The bearing 235 is disposed between the driven roller 230 and the hub 260. Therefore, the driven roller 230 can rotate around the central axis AX2 independently from the rotating shaft 250.

The inner peripheral surface of the driven roller 240 is fixed, by press fitting, to the outer peripheral surface of the bearing 245. At the time of press fitting, the right surface of the driven roller 240 is aligned with the right surface of the bearing 245. The width W23 of the pressure bonding portion 241 and the spacer 242 is slightly larger than the width B23 of the bearing 245. Thus, the left surface of the driven roller 240 protrudes to the left of the left surface of the bearing 245, and is positioned in the vicinity of the right surface of the main drive roller 220. A difference between the width W23 of the driven roller 240 and the width B23 of the bearing 245 is smaller than the gap G22 between the left surface of the bearing 245 and the right surface of the collar portion 261. Thus, a gap G24, which is smaller than the gap G22, can be secured between the left surface of the driven roller 240 and the right surface of the main drive roller 220. The gap G24 is smaller than the thickness of the cloth. The bearing 245 is disposed between the driven roller 240 and the hub 260. Therefore, the driven roller 240 can rotate around the central axis AX2 independently from the rotating shaft 250.

As described above, the attachment member 40 can change the position of the lower conveyance mechanism 12 in the left-right direction, and can adjust, in the left-right direction, the position at which the surface of the upper roller portion 110 faces the surface of the lower roller portion 210. Therefore, the lower conveyance portion 200 can move the position of the lower conveyance portion 200 with respect to the upper conveyance portion 100 between a directly facing position and a non-directly facing position. As shown in FIG. 4, the directly facing position is a position of the lower conveyance portion 200 when the main drive roller 120 faces the main drive roller 220 in the radial direction and the driven rollers 130 and 140 respectively face the driven rollers 230 and 240 in the radial direction. When the lower conveyance portion 200 is in the directly facing position, the upper conveyance portion 100 and the lower conveyance portion 200 can feed the cloth to the downstream side in a straight line along the conveyance direction P.

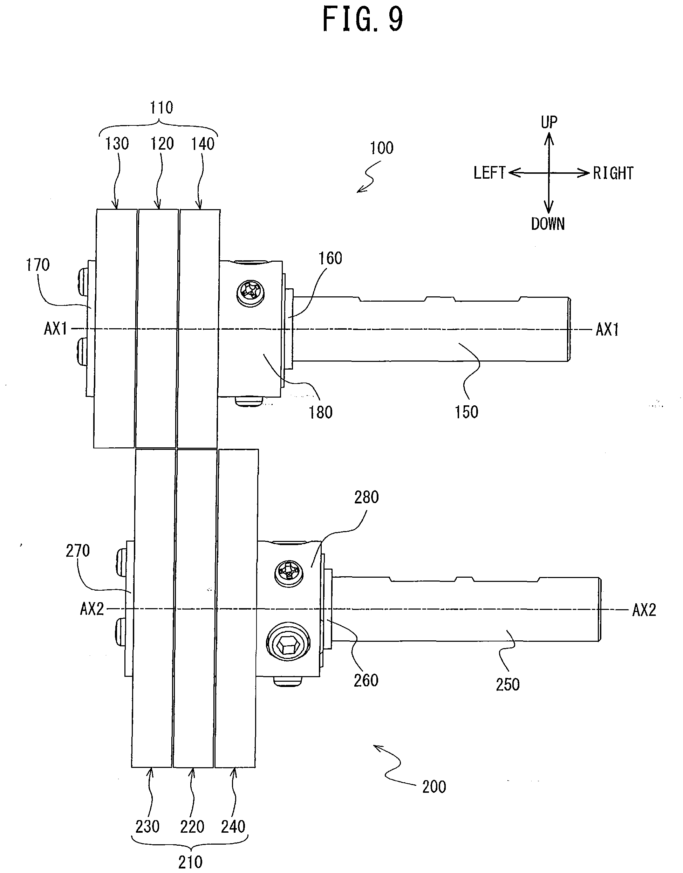

As shown in FIG. 9, the non-directly facing position is a position of the lower conveyance portion 200 when the main drive roller 120 faces the driven roller 230 in the radial direction and the main drive roller 220 faces the driven roller 140 in the radial direction. When the lower conveyance portion 200 is in the non-directly facing position, the upper conveyance portion 100 and the lower conveyance portion 200 can feed the cloth to the downstream side in the conveyance direction P while easily bending the cloth to the left side or the right side, by changing a relative rotation speed between the upper conveyance portion 100 and the lower conveyance portion 200. For example, when the rotation speed of the main drive roller 120 is higher than the rotation speed of the main drive roller 220, the upper roller portion 110 and the lower roller portion 210 try to feed the left-side section of the cloth positioned at the facing position to the downstream side in the conveyance direction P at a higher speed than the right-side section of the cloth. At this time, the upper roller 110 and the lower roller 210 feed the cloth to the downstream side while bending the cloth to the right with respect to the conveyance direction P. For example, when the rotation speed of the main drive roller 220 is higher than the rotation speed of the main drive roller 120, the upper roller portion 110 and the lower roller portion 210 try to feed the right-side section of the cloth positioned at the facing position to the downstream side in the conveyance direction P at a higher speed than the left-side section of the cloth. At this time, the upper roller portion 110 and the lower roller portion 210 feed the cloth to the downstream side while bending the cloth to the left with respect to the conveyance direction P. The non-directly facing position may be a position of the lower conveyance portion 200 when the main drive roller 120 faces the driven roller 240 in the radial direction and the main drive roller 220 faces the driven roller 130 in the radial direction.

When the cloth bonding is performed, the cloth bonding device 1 operates in the following manner. When the air cylinder inside the head 5 is driven, the upper conveyance mechanism 9 downwardly presses the leading end portion 37B of the support portion 37. The support portion 37 swings around the support shaft 46, and downwardly moves the upper conveyance portion 100 provided on the leading end portion 37B. The upper conveyance mechanism 9 and the lower conveyance mechanism 12 clamp the two cloths that are to be bonded, at the facing position where the upper roller portion 110 and the lower roller portion 210 face each other.

The cloth bonding device 1 drives the upper conveyance motor 22 of the upper conveyance mechanism 9 and the lower conveyance motor 14 of the lower conveyance mechanism 12, and rotates the output shafts 22A and 14A. In accordance with the rotation of the output shaft 22A of the upper conveyance motor 22, the rotating shaft 150 of the upper conveyance portion 100 rotates clockwise in a left side view. The main drive roller 120 of the upper roller portion 110 rotates clockwise in a left side view. In accordance with the rotation of the output shaft 14A of the lower conveyance motor 14, the rotating shaft 250 of the lower conveyance portion 200 rotates counterclockwise in a left side view. The main drive roller 220 of the lower roller portion 210 rotates counterclockwise in a left side view. The main drive roller 120 and the main drive roller 220 clamp the cloth at the facing position, and feed the cloth to the downstream side in the conveyance direction P while pressing the cloth. The driven rollers 130 and 140 are driven by the conveyance of the cloth in accordance with the rotation of the main drive roller 120, and rotate clockwise in a left side view. The driven rollers 230 and 240 are driven by the conveyance of the cloth in accordance with the rotation of the main drive roller 220, and rotate counterclockwise in a left side view. The driven rollers 130 and 140 and the driven rollers 230 and 240 clamp and press the cloth at the facing position while being driven and rotated.

When a cloth whose bonding section is curved is conveyed, the driven rollers 130 and 140 rotate independently from the main drive roller 120. At this time, the driven rollers 230 and 240 rotate independently from the main drive roller 220. Thus, the driven rollers 130 and 140 rotate by a rotation amount different from a rotation amount of the main drive roller 120. The driven rollers 230 and 240 rotate by a rotation amount different from a rotation amount of the main drive roller 220. When conveying a cloth whose bonding section bends to the right, the driven rollers 140 and 240 on the right side of the main drive rollers 120 and 220 respectively rotate by a rotation amount smaller than the rotation amount of the main drive rollers 120 and 220. The driven rollers 130 and 230 on the left side of the main drive rollers 120 and 220 respectively rotate by a rotation amount larger than the rotation amount of the main drive rollers 120 and 220. When conveying a cloth whose bonding section bends to the left, the driven rollers 140 and 240 on the right side of the main drive rollers 120 and 220 respectively rotate by a rotation amount larger than the rotation amount of the main drive rollers 120 and 220. The driven rollers 130 and 230 on the left side of the main drive rollers 120 and 220 respectively rotate by a rotation amount smaller than the rotation amount of the main drive rollers 120 and 220.

The upper roller portion 110 has the gaps G13 and G14 between the main drive roller 120 and the driven rollers 130 and 140. Thus, the driven rollers 130 and 140 rotate smoothly. The gaps G13 and G14 are smaller than the gaps G11 and G12 between the collar portion 161 and the bearings 135 and 145, and are smaller than the thickness of the cloth. Thus, the gaps G13 and G14 inhibit the cloth pressed at the facing position from entering into the gaps G13 and G14, and suppress generation of a section of the cloth that cannot be pressed. The lower roller portion 210 has the gaps G23 and G24 between the main drive roller 220 and the driven rollers 230 and 240. Thus, the driven rollers 230 and 240 rotate smoothly. The gaps G23 and G24 are smaller than the gaps G21 and G22 between the collar portion 261 and the bearings 235 and 245, and are smaller than the thickness of the cloth. Thus, the gaps G23 and G24 inhibit the cloth pressed at the facing position from entering into the gaps G23 and G24, and suppress generation of the section of the cloth that cannot be pressed. The outer diameter OD14 of the main drive roller 120 and the outer diameters OD15 and OD16 of the driven rollers 130 and 140 are the same as each other. The outer diameter OD24 of the main drive roller 220 and the outer diameters OD25 and OD26 of the driven rollers 230 and 240 are the same as each other. Therefore, the gap is constant at the facing position where the upper roller portion 110 and the lower roller portion 210 face each other.

The pump motor drives the gear pump, and the gear pump supplies the adhesive heated by the heaters 24 from the reservoir portion 8 to the nozzle 17. The nozzle 17 discharges the adhesive from the discharge outlets, and applies the adhesive to the upper cloth. While clamping and pressure bonding the lower cloth and the upper cloth to which the adhesive has been applied, the upper roller portion 110 and the lower roller portion 210 convey the upper cloth and the lower cloth, thus bonding the two cloths together. When the bonding sections of the cloths are straight or curved, the upper roller portion 110 and the lower roller portion 210 can convey the two cloths smoothly.

As explained above, the driven rollers 130 and 140 can rotate independently from the rotation of the main drive roller 120, and the driven rollers 230 and 240 can rotate independently from the rotation of the main drive roller 220. Thus, the driven rollers 130 and 140 can rotate by a rotation amount different from the rotation amount of the main drive roller 120, and the driven rollers 230 and 240 can rotate by a rotation amount different from the rotation amount of the main drive roller 220. For example, when the driven roller 130 and the driven roller 230 are each positioned on the inner peripheral side of the bonding section of the curved cloth, the driven roller 130 and the driven roller 230 can respectively rotate by a rotation amount smaller than the rotation amount of the main drive roller 120 and the main drive roller 220. At this time, the driven roller 140 and the driven roller 240 are each positioned on the outer peripheral side of the curved bonding section, and respectively rotate by a rotation amount larger than the rotation amount of the main drive roller 120 and the main drive roller 220. For example, when the driven roller 130 and the driven roller 230 are each positioned on the outer peripheral side of the curved bonding section, the driven roller 130 and the driven roller 230 can respectively rotate by a rotation amount larger than the rotation amount of the main drive roller 120 and the main drive roller 220. At this time, the driven roller 140 and the driven roller 240 are each positioned on the inner peripheral side of the curved bonding section, and respectively rotate by a rotation amount smaller than the rotation amount of the main drive roller 120 and the main drive roller 220. Thus, the cloth bonding device 1 can convey the cloths smoothly and stably, and can apply the adhesive uniformly. The outer diameter OD14 of the main drive roller 120, and the outer diameters OD15 and OD16 of the driven rollers 130 and 140 are the same as each other. The outer diameter OD24 of the main drive roller 220, and the outer diameters OD25 and OD26 of the driven rollers 230 and 240 are the same as each other. Therefore, when the cloths are conveyed, the gap between the upper roller portion 110 and the lower roller portion 210 is constant in the width direction parallel to the axial direction of the rotating shafts 150 and 250. Thus, the upper roller portion 110 and the lower roller portion 210 can uniformly press the cloths, and can reliably bond the cloths together.

When the curved shape of the bonding section of the cloth is curved to the right, the driven roller 140 on the right side of the main drive roller 120 rotates by a rotation amount smaller than that of the main drive roller 120. The driven roller 130 on the left side of the main drive roller 120 rotates by a rotation amount larger than that of the main drive roller 120. The driven roller 240 on the right side of the main drive roller 220 rotates by a rotation amount smaller than that of the main drive roller 220. The driven roller 230 on the left side of the main drive roller 220 rotates by a rotation amount larger than that of the main drive roller 220. When the curved shape of the bonding section of the cloth is curved to the left, the driven roller 140 on the right side of the main drive roller 120 rotates by a rotation amount larger than that of the main drive roller 120. The driven roller 130 on the left side of the main drive roller 120 rotates by a rotation amount smaller than that of the main drive roller 120. The driven roller 240 on the right side of the main drive roller 220 rotates by a rotation amount larger than that of the main drive roller 220. The driven roller 230 on the left side of the main drive roller 220 rotates by a rotation amount smaller than that of the main drive roller 220. Thus, the cloth bonding device 1 can convey the cloth smoothly and stably, and can uniformly apply the adhesive.

The driven roller 130 is sandwiched between the regulation plate 170 and the main drive roller 120, and the driven roller 140 is sandwiched between the regulation ring 180 and the main drive roller 120. The regulation plate 170 and the regulation ring 180 regulate the movement of the driven rollers 130 and 140 in the axial direction, and inhibit the gaps between the main drive roller 120 and the driven rollers 130 and 140 from expanding. The driven roller 230 is sandwiched between the regulation plate 270 and the main drive roller 220, and the driven roller 240 is sandwiched between the regulation ring 280 and the main drive roller 220. The regulation plate 270 and the regulation ring 280 regulate the movement of the driven rollers 230 and 240 in the axial direction, and inhibit the gaps between the main drive roller 220 and the driven rollers 230 and 240 from expanding. Thus, the upper roller portion 110 and the lower roller portion 210 can uniformly press the cloths in the width direction of the upper roller portion 110 and the lower roller portion 210, and can reliably bond the cloths together. The regulation plates 170 and 270 are fixed to the left end surfaces of the hubs 160 and 260, respectively. Thus, at the time of a bonding operation, the operator can secure an operation area on the left side of the regulation plates 170 and 270.

The rotating shaft 150 can support the driven rollers 130 and 140 via the bearings 135 and 145. Since a rotational resistance is smaller than when the rotating shaft 150 directly supports the driven rollers 130 and 140, the driven rollers 130 and 140 can rotate smoothly. The rotating shaft 250 can support the driven rollers 230 and 240 via the bearings 235 and 245. Since the rotational resistance is smaller than when the rotating shaft 250 directly supports the driven rollers 230 and 240, the driven rollers 230 and 240 can rotate smoothly.

The inner peripheral surfaces of the driven rollers 130 and 140 are fixed, by press fitting, to the outer peripheral surfaces of the bearings 135 and 145. The inner peripheral surfaces of the driven rollers 230 and 240 are fixed, by press fitting, to the outer peripheral surfaces of the bearings 235 and 245. In the cloth bonding device 1, when the driven rollers 130 and 140 and the bearings 135 and 145 are fixed to each other and when the driven rollers 230 and 240 and the bearings 235 and 245 are fixed to each other, an engagement structure, screws, an adhesive and the like are not required. Thus, in the cloth bonding device 1, the structure can be simplified and the number of components can be reduced.

The inner diameter ID 11 of the spacer 122 of the main drive roller 120 is the same as the inner diameter ID12 of the spacer 132 of the driven roller 130. The inner diameter ID11 of the spacer 122 of the main drive roller 120 is the same as the inner diameter ID 13 of the spacer 142 of the driven roller 140. The inner diameter ID21 of the spacer 222 of the main drive roller 220 is the same as the inner diameter ID22 of the spacer 232 of the driven roller 230. The inner diameter ID21 of the spacer 222 of the main drive roller 220 is the same as the inner diameter ID23 of the spacer 242 of the driven roller 240. In other words, the main drive roller 120, the driven roller 130 and the driven roller 140 have the same configuration. The main drive roller 220, the driven roller 230 and the driven roller 240 have the same configuration. Thus, the main drive roller 120 and the driven rollers 130 and 140 can achieve the use of common components. The main drive roller 220 and the driven rollers 230 and 240 can achieve the use of common components.

The gaps G11 and G12 are respectively provided between the right surface of the bearing 135 and the left surface of the collar portion 161 and between the left surface of the bearing 145 and the right surface of the collar portion 161. Therefore, the rotating shaft 150 can rotate smoothly. The right surface of the driven roller 130 and the left surface of the driven roller 140 respectively protrude further to the main drive roller 120 side than the right surface of the bearing 135 and the left surface of the bearing 145. Thus, the upper conveyance portion 100 can narrow the gaps between the main drive roller 120 and the driven rollers 130 and 140. The gaps G21 and G21 are respectively provided between the right surface of the bearing 235 and the left surface of the collar portion 261 and between the left surface of the bearing 245 and.the right surface of the collar portion 261. Therefore, the rotating shaft 250 can rotate smoothly. The right surface of the driven roller 230 and the left surface of the driven roller 240 respectively protrude further to the main drive roller 220 side than the right surface of the bearing 235 and the left surface of the bearing 245. Thus, the lower conveyance portion 200 can narrow the gaps between the main drive roller 220 and the driven rollers 230 and 240. Thus, the upper roller portion 110 and the lower roller portion 210 can uniformly press the cloths in the width direction, and can reliably bond the cloths together.

In the directly facing position, the main drive roller 120 and the main drive roller 220 face each other, and can feed the cloth in a straight line in the direction orthogonal to the rotating shaft 150 and the rotating shaft 250. In the non-directly facing position, by changing the relative rotation speed of the main drive roller 120 and the main drive roller 220, the main drive roller 120 and the main drive roller 220 can feed the cloth while easily bending the cloth to one side or the other side in the axial direction.

In addition to the above-described embodiment, the present invention can be modified in various manners. Although the upper roller portion 110 is provided with the two driven rollers 130 and 140 on both the left and right sides of the main drive roller 120, a single driven roller or three or more driven rollers may be provided. Although the lower roller portion 210 is provided with the two driven rollers 230 and 240 on both the left and right sides of the main drive roller 220, a single driven roller or three or more driven rollers may be provided.

For example, the upper roller portion 110 may be provided with the two driven rollers 130 and 140 on the left side of the main drive roller 120, and the main drive roller 120 and the driven roller 240 may face each other. In this case, without changing the position of the lower conveyance mechanism 12 in the left-right direction, the lower conveyance portion 200 can be in the non-directly facing position with respect to the upper conveyance portion 100, and the upper roller portion 110 and the lower roller portion 210 can be in the same position in the left-right direction. The upper roller portion 110 and the lower roller portion 210 can press the cloths uniformly in the width direction of the upper roller portion 110 and the lower roller portion 210.

Although the upper roller portion 110 is provided on the left side of the leading end portion 37B of the support portion 37, the upper roller portion 110 may be provided on the right side of the leading end portion 37B or may be provided at the center of the leading end portion 37B. Although the lower roller portion 210 is provided on the left side of the leading end portion 70B of the support portion 70, the lower roller portion 210 may be provided on the right side of the leading end portion 70B or may be provided at the center of the leading end portion 70B. The spacers 122, 132 and 142 of the upper conveyance portion 100 and the spacers 222, 232 and 242 of the lower conveyance portion 200 may be same components. In this case, the outer diameters OD14 to OD16 of the main drive roller 120 and the driven rollers 130 and 140 may be the same as the outer diameters OD24 to OD26 of the main drive roller 220 and the driven rollers 230 and 240. In other words, the upper conveyance portion 100 and the lower conveyance portion 200 may have the same configuration. The rotating shaft 150 and the hub 160 may be integrally formed. The rotating shaft 250 and the hub 260 may be integrally formed.

The inner diameters ID 11 to ID 13 of the spacers 122, 132 and 142 may be different from the inner diameters ID21 to ID23 of the spacers 222, 232 and 242 of the lower conveyance portion 200. In this case, the rotating shaft 150 and the rotating shaft 250 may be different components, and the hub 160 and the hub 260 may be different components.

The inner peripheral surfaces of the driven rollers 130 and 140 need not necessarily be fixed, by press fitting, to the outer peripheral surfaces of the bearings 135 and 145. The inner peripheral surfaces of the driven rollers 230 and 240 need not necessarily be fixed, by press fitting, to the outer peripheral surfaces of the bearings 235 and 245. In this case, the driven rollers 130 and 140 may be fixed by bonding to the bearings 135 and 145, respectively. In this case, the driven rollers 230 and 240 may be fixed by bonding to the bearings 235 and 245, respectively.

The driven rollers 130 and 140 may be fixed to a rotating shaft other than the rotating shaft 150. The driven rollers 230 and 240 may be fixed to a rotating shaft other than the rotating shaft 250. In this case, it is sufficient if the rotating shaft of the driven rollers 130 and 140 and the rotating shaft 150, and the rotating shaft of the driven rollers 230 and 240 and the rotating shaft 250, respectively, have the same central axis and are independent from each other.

The fixing position at which the lower conveyance mechanism 12 is fixed to the attachment member 40 by the screw can be changed in the left-right direction. However, the fixing position need not necessarily be changed. In this case, the upper conveyance mechanism 9 may change, in the left-right direction, the position at which the leading end portion 37B of the support portion 37 holds the upper conveyance portion 100. The lower conveyance mechanism 12 may be provided with a motor, an air cylinder and the like that move in the left-right direction, and thus may move the lower conveyance portion 200 in the left-right direction.

In the above description, the upper conveyance portion 100 corresponds to a first conveyance portion of the present invention. The lower conveyance portion 200 corresponds to a second conveyance portion of the present invention. The upper conveyance motor 22 corresponds to a first drive portion of the present invention. The lower conveyance motor 14 corresponds to a second drive portion of the present invention. The rotating shaft 150 corresponds to a first shaft of the present invention. The main drive roller 120 corresponds to a first main drive roller of the present invention. The driven rollers 130 and 140 correspond to a first driven roller of the present invention. The rotating shaft 250 corresponds to a second shaft of the present invention. The main drive roller 220 corresponds to a second main drive roller of the present invention. The driven rollers 230 and 240 correspond to a second driven roller of the present invention. The regulation plate 170 and the regulation ring 180 correspond to a first regulation member of the present invention. The regulation plate 270 and the regulation ring 280 correspond to a second regulation member of the present invention. The regulation plate 170 corresponds to a first regulation plate of the present invention. The regulation ring 180 corresponds to a first regulation ring of the present invention. The regulation plate 270 corresponds to a second regulation plate of the present invention. The regulation ring 280 corresponds to a second regulation ring of the present invention. The bearings 135 and 145 correspond to a first bearing of the present invention. The bearings 235 and 245 correspond to a second bearing of the present invention. The collar portion 161 corresponds to a first collar portion of the present invention. The collar portion 261 corresponds to a second collar portion of the present invention.

## Claims

1. A cloth bonding device (1) including a nozzle (17) adapted to discharge an adhesive onto a cloth, a first conveyance portion (100) disposed on a downstream side in a conveyance direction of the cloth with respect to the nozzle, and a second conveyance portion (200) adapted to clamp the cloth together with the first conveyance portion and to convey the cloth in cooperation with the first conveyance portion, the cloth bonding device comprising:
a first drive portion (22) adapted to generate power to drive the first conveyance portion; and
a second drive portion (14) adapted to generate power to drive the second conveyance portion,
wherein
the first conveyance portion includes:
a first main drive roller (120) adapted to rotate around a first shaft (150) using the power generated by the first drive portion; and
a first driven roller (130, 140) adapted to rotate independently from rotation of the first main drive roller, the first driven roller being adjacent to the first main drive roller and having a same outer diameter as the first main drive roller and a same central axis as the first shaft; and
the second conveyance portion includes:
a second main drive roller (220) arranged in parallel to the first shaft and adapted to rotate around a second shaft (250) using the power generated by the second drive portion; and
a second driven roller (230, 240) adapted to rotate independently from rotation of the second main drive roller, the second driven roller being adjacent to the second main drive roller and having a same outer diameter as the second main drive roller and a same central axis as the second shaft.

2. The cloth bonding device according to claim 1, wherein
the first conveyance portion includes a plurality of the first driven rollers disposed on at least one of both sides of the first main drive roller in an axial direction of the first shaft, and
the second conveyance portion includes a plurality of the second driven rollers disposed on at least one of both sides of the second main drive roller in an axial direction of the second shaft.

3. The cloth bonding device according to claim 2, wherein
the first conveyance portion includes the plurality of first driven rollers disposed on both the sides of the first main drive roller in the axial direction of the first shaft, and
the second conveyance portion includes the plurality of second driven rollers disposed on both the sides of the second main drive roller in the axial direction of the second shaft.

4. The cloth bonding device according to claim 3, wherein
the first conveyance portion includes a first regulation member fixed to the first shaft, the first regulating member regulating movement of the first driven roller in the axial direction of the first shaft by sandwiching the first driven roller between the first regulation member and the first main drive roller,
the second conveyance portion includes a second regulation member fixed to the second shaft, the second regulating member regulating movement of the second driven roller in the axial direction of the second shaft by sandwiching the second driven roller between the second regulation member and the second main drive roller,
the first regulation member includes:
a first regulation plate (170) having a plate shape with a larger outer diameter than the first shaft, and being fixed to an end portion of the first shaft; and
a first regulation ring (180) having an annular shape that covers a surface of the first shaft in a circumferential direction, and being fixed to the surface of the first shaft on an opposite side to the first regulation plate with respect to the first main drive roller and the first driven roller, and
the second regulation member includes;
a second regulation plate (270) having a plate shape with a larger outer diameter than the second shaft, and being fixed to an end portion of the second shaft; and
a second regulation ring (280) having an annular shape that covers a surface of the second shaft in a circumferential direction, and being fixed to the surface of the second shaft on an opposite side to the second regulation plate with respect to the second main drive roller and the second driven roller.

5. The cloth bonding device according to any one of claims 1 to 4, wherein
the first main drive roller is fixed to the first shaft,
the first shaft rotates using the power generated by the first drive portion,
the first conveyance portion includes a first bearing (135, 145) between the first shaft and the first driven roller, the first bearing supporting the first driven roller such that the first driven roller can rotate independently from rotation of the first shaft,
the second main drive roller is fixed to the second shaft,
the second shaft rotates using the power generated by the second drive portion, and
the second conveyance portion includes a second bearing (235, 245) between the second shaft and the second driven roller, the second bearing supporting the second driven roller such that the second driven roller can rotate independently from rotation of the second shaft.

6. The cloth bonding device according to claim 5, wherein
the first driven roller and the first bearing have an annular shape,
an outer peripheral surface of the first bearing is fixed, by press fitting, to an inner peripheral surface of the first driven roller,
the second driven roller and the second bearing have an annular shape, and
an outer peripheral surface of the second bearing is fixed, by press fitting, to an inner peripheral surface of the second driven roller.

7. The cloth bonding device according to claim 6, wherein
the first main drive roller has an annular shape, and an inner diameter of the first main drive roller is the same as an inner diameter of the first driven roller,
the first shaft has a flange-shaped first collar portion (161) having a same outer diameter as the first bearing,
an outer peripheral surface of the first collar portion is fixed, by press fitting, to an inner peripheral surface of the first main drive roller,
the second main drive roller has an annular shape, and an inner diameter of the second main drive roller is the same as an inner diameter of the second driven roller,
the second shaft has a flange-shaped second collar portion (261) having a same outer diameter as the second bearing, and
an outer peripheral surface of the second collar portion is fixed, by press fitting, to an inner peripheral surface of the second main drive roller.

8. The cloth bonding device according to claim 7, wherein
a gap is provided between an end surface of the first bearing and an end surface of the first collar portion in the axial direction of the first shaft, and an end surface of the first driven roller protrudes further to the first main drive roller side than the end surface of the first bearing in the axial direction of the first shaft, and
a gap is provided between an end surface of the second bearing and an end surface of the second collar portion in the axial direction of the second shaft, and an end surface of the second driven roller protrudes further to the second main drive roller side than the end surface of the second bearing in the axial direction of the second shaft.

9. The cloth bonding device according to any one of claims 1 to 8, wherein
the second conveyance portion adapted to move in the axial direction of the second shaft between a directly facing position and a non-directly facing position, the directly facing position being a position at which the first main drive roller faces the second main drive roller in a radial direction and the first driven roller faces the second driven roller in the radial direction, and the non-directly facing position being a position at which the first main drive roller faces the second driven roller in the radial direction and the second main drive roller faces the first driven roller in the radial direction.
